# EUROPÄISCHE PATENTSCHRIFT

(11) **EP 4 034 359 B1**
(45) Veröffentlichungstag und Bekanntmachung des Hinweises auf die Patenterteilung: **10.04.2024**
(21) Anmeldenummer: 20772301.6
(22) Anmeldetag: 16.09.2020
(51) Int. Cl.: B29C 43/48, B29C 70/44, B29C 70/50

(54) **VORRICHTUNGEN UND VERFAHREN ZUR HERSTELLUNG EINES T-FÖRMIGEN HALBZEUGS AUS EINEM MEHRLAGIGEN GELEGE**
APPARATUS AND PROCESS FOR MANUFACTURING A T-SHAPED SEMI-FINISHED PRODUCT FROM A MULTILAYER MAT
DISPOSITIF ET PROCÉDÉ DE FABRICATION D'UN PRODUIT SEMI-FINI EN T FAIT D'UN MAT MULTI-COUCHES

(30) Priorität: 23.09.2019 DE 102019125498; 23.09.2019 DE 102019125494
(43) Veröffentlichungstag der Anmeldung: 03.08.2022
(73) Patentinhaber: Airbus Operations GmbH, 21129 Hamburg (DE)
(72) Erfinder: ROCKER, Olaf, 21129 Hamburg (DE); GILLESSEN, Alexander, 21129 Hamburg (DE); TORBEN, Jacob, 21129 Hamburg (DE); BARLAG, Carsten, 21129 Hamburg (DE); SDUNNUS, Thore, 21129 Hamburg (DE)
(86) Internationale Anmeldenummer: PCT/EP2020/075866
(87) Internationale Veröffentlichungsnummer: WO 2021/058350

(56) Entgegenhaltungen:
- EP-A1- 3 482 902
- EP-A2- 1 481 790
- WO-A1-00/24563
- DE-A1-102007 032 819
- US-A1- 2012 056 358

## Beschreibung

Die vorliegende Erfindung betrifft Vorrichtungen und Verfahren zur Herstellung eines T-förmigen Halbzeugs aus einem mehrlagigen Gelege von Verstärkungsfasern für einen Verbundwerkstoff. Es werden zwei Gruppen von Ausführungsformen A und B beschrieben.

Im Flugzeugbau werden an vielen Stellen Faserverbundwerkstoffe verwendet, aus denen besonders leichte und damit wirtschaftliche Flugzeugbauteile hergestellt werden können. Faserverbundwerkstoffe können in verschiedenen Formen verarbeitet werden. Beispielsweise werden oftmals bereits mit einem Harz getränkte Gewebe verarbeitet, die auch als Prepregs bezeichnet werden. Alternativ ist es bekannt, mehrlagige ebene Gelege aus Verstärkungsfasern zu Halbzeugen umzuformen, bevor diese mit Harz versetzt und ausgehärtet werden. Da die Gelege aus lose aufeinanderliegenden Lagen gebildet werden, bei denen die Fasern anders als bei Geweben nicht miteinander verwoben sind, bezeichnet man sie auch als "non-crimp fabric."

Damit die Gelege nicht gegeneinander verrutschen, sind sie mit einem Bindemittel versetzt, dass - einmal aktiviert - die Fasern der unterschiedlichen Lagen miteinander verbindet. Bekannt sind beispielsweise Bindemittel, die durch Wärme aktiviert werden. Aus dem Stand der Technik ist es bekannt, das Bindemittel zu aktivieren, direkt bevor das Gelege umgeformt wird, so dass nach dem Umformen die Lagen des Geleges miteinander verbunden sind, nicht mehr gegeneinander verrutschen und ihre Form bis zum Einbringen des Harzes beibehalten. Dieses Vorgehen hat jedoch den Nachteil, dass zum Umformen nur wenig Zeit verbleibt und Fehler beim Umformen nicht oder nur schwerlich korrigiert werden können, wenn das Bindemittel einmal ausgehärtet ist.

Alternativ ist es beispielsweise aus DE 10 2016 125 958 A1 bekannt, ein Gelege aus einer Mehrzahl von gestapelten Faserlagen zu einem T-förmigen Halbzeug umzuformen, bevor das das Bindemittel aktiviert wird. Das T-förmige Halbzeug umfasst einen Steg und einen sich senkrecht zum Steg erstreckenden Flansch, wobei ein Stegabschnitt des Geleges, der den Steg bilden soll, in einem Stegformwerkzeug eingespannt wird, und der verbleibende Flanschabschnitt des Geleges mit Hilfe eines Umformwerkzeug mit mehreren Rollen in zwei Teile aufgeteilt und zu einem Steg umgeformt wird.

Da das Bindemittel erst nach dem Umformen aktiviert und das Gelege auch erst nach dem Umformen mit einem Harz getränkt und ausgehärtet wird, können die Lagen des Geleges leicht umgeformt werden. Damit die Faserlagen nach dem Umformen ihre Position beibehalten, bis das Bindemittel aktiviert und ausgehärtet ist, kann nach dem Umformen der Faserlagen des Geleges beispielsweise eine Folie auf dem den Flansch bildenden Teil des Geleges angeordnet werden. Die Folie oder Membran wird mittels eines Unterdrucks an das Stegformwerkzeug angesaugt und hält so das Gelege in Position. Durch zusätzliche Wärmequellen, beispielsweise Infrarotstrahler oder Induktionsspulen, kann das Bindemittel im Gelege dann aktiviert werden, so dass sich die Lagen des Geleges bereits miteinander verbinden, bevor sie mit Harz getränkt und ausgehärtet werden.

Das Dokument DE 102007032819A1 offenbart ein Verfahren zur Herstellung eines T-Stringers, insbesondere im Luft- und Raumfahrtbereich, mit folgenden Schritten: Bereitstellen eines ersten und zweiten Vorgelegestreifens; Auflegen einer ersten Trennfolie auf einen einem auszubildenden Stringerfuß des T-Stringers zugeordneten Abschnitt des ersten Vorgelegestreifens, wobei die erste Trennfolie an eine Kante des ersten Vorgelegestreifens angrenzt; Auflegen einer zweiten Trennfolie auf einen dem auszubildenden Stringerfuß zugeordneten Abschnitt des zweiten Vorgelegestreifens, wobei die zweite Trennfolie an eine Kante des zweiten Vorgelegestreifens angrenzt; Auflegen des zweiten Vorgelegestreifens auf den ersten Vorgelegestreifen derart, dass ein einem auszubildenden Stringersteg des T-Stringers zugeordneter Abschnitt des zweiten Vorgelegestreifens auf einem dem auszubildenden Stringersteg des T-Stringers zugeordneten Abschnitt des ersten Vorgelegestreifens aufliegt und die erste und zweite Trennfolie aufeinander aufliegen; Auffalten der dem auszubildenden Stringerfuß zugeordneten Abschnitte des ersten und zweiten Vorgelegestreifens in entgegengesetzter Richtung; und wenigstens teilweise Aushärten des ersten und zweiten Vorgelegestreifens zum Ausbilden des T-Stringers.

Vor diesem Hintergrund ist es eine Aufgabe der vorliegenden Erfindung, eine alternative Vorrichtung und ein alternatives Verfahren zur Herstellung eines T-förmigen Halbzeugs aus einem mehrlagigen Gelege anzugeben.

Die Aufgabe wird gelöst durch eine Vorrichtung A nach Anspruch 1 und ein Verfahren A nach Anspruch 4 sowie eine Vorrichtung B nach Anspruch 6 und ein Verfahren B nach Anspruch 12.

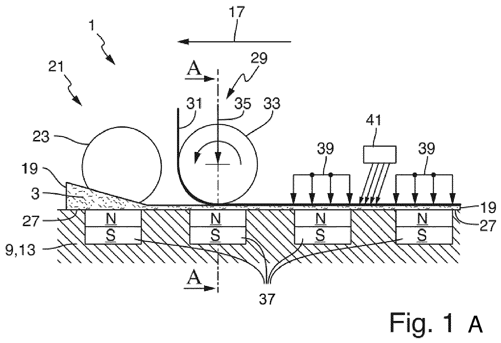

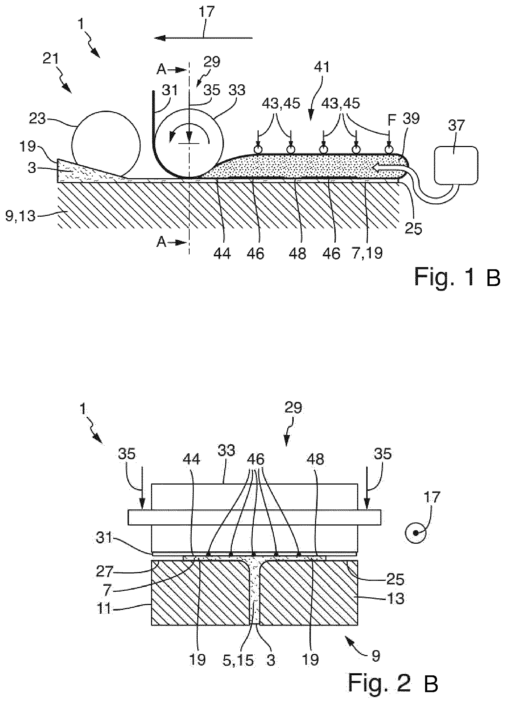

Bevorzugte Ausgestaltungen des Verfahrens A und B und der Vorrichtung A und B sind in den abhängigen Ansprüchen angegeben. Die Bezugszeichen beziehen sich dabei jeweils auf die Figuren 1A, 2A, 3A für die Ausführungsformen A und auf die Figuren 1B, 2B, 3B für die Ausführungsformen B.

Gemäß einem ersten Aspekt wird die Aufgabe durch eine Vorrichtung A zur Herstellung eines T-förmigen Halbzeugs aus einem mehrlagigen Gelege von Verstärkungsfasern für einen Verbundwerkstoff gelöst, wobei das Gelege mit einem Bindemittel versetzt ist und das T-förmige Halbzeug einen Steg und einen sich senkrecht zum Steg erstreckenden Flansch aufweist. Die Vorrichtung umfasst ein sich in einer Arbeitsrichtung erstreckendes Stegformwerkzeug, das konfiguriert ist, um einen den Steg formenden Stegabschnitt des mehrlagigen Geleges einzuspannen, ein Umformwerkzeug, das in Arbeitsrichtung über Stegformwerkzeug bewegbar ist, um Lagen eines Flanschabschnitts des mehrlagigen Geleges in zwei Teile aufzuteilen und zu dem Flansch des T-förmigen Halbzeugs umzuformen, und eine Ablagevorrichtung, die ebenfalls in Arbeitsrichtung über das Stegformwerkzeug bewegbar und konfiguriert ist, um eine flexible Folie auf dem zum Flansch umgeformten Flanschabschnitt abzulegen, wobei das Stegformwerkzeug und die flexible Folie so ausgebildet sind, dass eine magnetische Kraft zwischen der Folie und dem Stegformwerkzeug erzeugt wird, die die flexible Folie auf das Stegformwerkzeug zieht, so dass die flexible Folie den zum

Flansch umgeformten Flanschabschnitt festhält, wobei des Stegformwerkzeug einen oder mehrere Permanentmagnete und/oder einen oder mehrere Elektromagnete aufweist und wobei die flexible Folie aus einem magnetisierbaren oder magnetischen Material gebildet ist.

Gemäß einem ersten Aspekt wird die Aufgabe durch eine Vorrichtung B zur Herstellung eines T-förmigen Halbzeugs aus einem mehrlagigen Gelege von Verstärkungsfasern für einen Verbundwerkstoff gelöst, wobei das Gelege mit einem Bindemittel versetzt ist und das T-förmige Halbzeug einen Steg und einen sich senkrecht zum Steg erstreckenden Flansch aufweist. Die Vorrichtung umfasst ein sich in einer Arbeitsrichtung erstreckendes Stegformwerkzeug, das konfiguriert ist, um einen den Steg formenden Stegabschnitt des mehrlagigen Geleges einzuspannen, ein Umformwerkzeug, das in Arbeitsrichtung über Stegformwerkzeug bewegbar ist, um Lagen eines Flanschabschnitts des mehrlagigen Geleges in zwei Teile aufzuteilen und zu dem Flansch des T-förmigen Halbzeugs umzuformen, eine Ablagevorrichtung, die ebenfalls in Arbeitsrichtung über das Stegformwerkzeug bewegbar ist, um einen Schlauchkörper auf dem zum Flansch umgeformten Flanschabschnitt abzulegen, ein Haltewerkzeug, das ein oder mehrere Halteelemente umfasst, wobei das Haltewerkzeug so positionierbar ist, dass der Schlauchkörper in einem Freiraum zwischen dem oder den Haltelementen und dem zum Flansch umgeformten Flanschabschnitt angeordnet ist, und eine Füllvorrichtung, die konfiguriert ist, um den Schlauchkörper derart mit einem Fluid zu befüllen, dass der Schlauchkörper den Freiraum ausfüllt und den zum Flansch umgeformten Flanschabschnitt festhält.

Mit anderen Worten betrifft die vorliegende Erfindung eine Vorrichtung, mit der Gelege aus Verstärkungsfasern, beispielsweise Glasfasern oder Kohlenstofffasern, zu einem T-förmigen Halbzeug umgeformt werden können. Das Gelege umfasst eine Vielzahl von lose aufeinanderliegenden oder übereinander gestapelten Lagen, die gegeneinander verschoben werden können. Die einzelnen Lagen des Geleges sind somit nicht miteinander verbunden. Insbesondere sind sie weder miteinander verwoben noch vernäht oder verklebt. Zwischen den Lagen ist ein beispielsweise pulverförmiges Bindemittel angeordnet, das, sobald es aktiviert und ausgehärtet ist, die Lagen miteinander verbindet oder verklebt, so dass diese nicht mehr gegeneinander verschoben werden können. Ist das Bindemittel einmal ausgehärtet, können die Lagen auch nur noch schwerlich umgeformt werden, da die Lagen des Geleges relativ zueinander fixiert sind.

Das Gelege ist in zumindest zwei Abschnitte unterteilt, einen Stegabschnitt und einen Flanschabschnitt. Der Bereich des Geleges, der als Stegabschnitt bezeichnet wird, soll den Steg des T-förmigen Halbzeugs bilden, während aus dem als Flanschabschnitt bezeichneten Bereich des Geleges mit der Vorrichtung der Flansch des T-förmigen Halbzeugs geformt wird.

Die Vorrichtung A selbst umfasst zumindest drei Elemente: ein Stegformwerkzeug, ein Umformwerkzeug und eine Ablagevorrichtung. Die verschiedenen Elemente können eigenständig sein, aber auch kombiniert werden. Insbesondere können das Umformwerkzeug und die Ablagevorrichtung am gleichen Rahmen angeordnet und gemeinsam bewegt werden.

Die Vorrichtung B selbst umfasst zumindest fünf Elemente: ein Stegformwerkzeug, ein Umformwerkzeug, eine Ablagevorrichtung, ein Haltewerkzeug und eine Füllvorrichtung. Die verschiedenen Elemente können eigenständig sein, aber auch kombiniert werden.

Das Stegformwerkzeug ist dafür vorgesehen, den Stegabschnitt des Geleges einzuspannen, also die Lagen des mehrlagigen Geleges in dem Bereich festzuhalten oder zu klemmen, der später einmal den Steg des T-förmigen Halbzeugs bilden soll. Hierzu erstreckt sich das Stegformwerkzeug entlang einer Arbeitsrichtung, die mit der Richtung zusammenfällt, in die sich der Steg des T-förmigen Halbzeugs erstrecken soll. Die Arbeitsrichtung muss nicht notwendigerweise eine Gerade sein, sondern kann auch Krümmungen aufweisen. Vorzugsweise umfasst das Stegformwerkzeug zwei langgestreckte Backen, die sich parallel zur Arbeitsrichtung erstrecken und so konfiguriert sind, dass der Stegabschnitt zwischen den langgestreckten Backen eingespannt werden kann.

Nachdem der Stegabschnitt des Geleges im Stegformwerkzeug eingespannt worden ist, wird der aus dem Stegformwerkzeug herausragende Flanschabschnitt des mehrlagigen Geleges mit dem Umformwerkzeug zu dem Flansch des T-förmigen Halbzeugs umgeformt. Dabei teilt das in Arbeitsrichtung über das Stegformwerkzeug fahrende Umformwerkzeug die Lagen des Geleges zunächst in zwei Teile auf, die dann in entgegengesetzte Richtung relativ zum Stegabschnitt umgeklappt werden. Die Anzahl der Lagen in den beiden Teilen kann gleich groß oder unterschiedlich groß sein.

Hierzu weist das Umformwerkzeug vorzugsweise eine Mehrzahl von Umformrollen auf, die parallel zur Arbeitsrichtung über das Stegformwerkzeug bewegbar sind, um den Flanschabschnitt des sich zunächst in einer Ebene erstreckende Geleges in zwei Teile aufzuteilen und zu dem Flansch umzuformen. Die Umformrollen drücken die Lagen des Flanschabschnitts zunächst auseinander und klappen sie dann kontinuierlich immer weiter um, bis sich der Flanschabschnitt in einer Ebene erstreckt, die senkrecht zu der Ebene verläuft, in der der von dem Stegformwerkzeug gehaltene Stegabschnitt verläuft. Dabei können beispielsweise auf das Umformwerkzeug zuweisende Oberflächen des Stegformwerkzeugs, insbesondere der langgestreckten Backen des Stegformwerkzeugs, als Anlageflächen dienen, gegen die der Flanschabschnitt umgeformt wird.

Anschließend wird im Fall der Ausführungsformen A mit der Ablagevorrichtung eine flexible Folie oder Membran auf dem zum Flansch umgeformten Flanschabschnitt abgelegt, wobei die Folie aus einem magnetischen oder magnetisierbaren Material gebildet ist. Die Ablagevorrichtung umfasst in einer bevorzugten Ausführungsform eine Anpressrolle, die in Arbeitsrichtung derart über das Stegformwerkzeug bewegbar ist, das die flexible Folie in Arbeitsrichtung hinter dem Umformwerkzeug über die Anpressrolle auf den zum Flansch umgeformten Flanschabschnitt geführt und an den Flanschabschnitt angedrückt wird. So wird auf vorteilhafte Weise sichergestellt, dass die Folie eben auf dem umgeformten Flanschabschnitt anliegt, auch wenn der Flansch des T-förmigen Halbzeugs gekrümmt sein sollte oder anderen komplexen Geometrien folgt.

Schließlich sind im Fall der Ausführungsformen A das Stegformwerkzeug und die flexible Folie so ausgebildet, dass zwischen Folie und Stegformwerkzeug eine magnetische Kraft erzeugt wird bzw. erzeugt werden kann, die die Folie zum Stegformwerkzeug bzw. zu von dem Stegformwerkzeug gebildeten Anlageflächen für den Flanschabschnitt hin zieht. Hierfür weist das Stegformwerkzeug einen oder mehrere Permanentmagnete und/oder einen oder mehrere Elektromagnete auf, die mit einer magnetischen oder magnetisierbaren Folie zusammenwirken.

Durch die auf die Folie wirkende Magnetkraft wird im Fall der Ausführungsformen A der umgeformte Flanschabschnitt zwischen Folie und Stegformwerkzeug eingeklemmt und sicher in der umgeformten Position gehalten. Da die Folie flexibel ist, kann sie auch auf gekrümmten oder auf andere Weise nicht ebenen Anlageflächen abgelegt werden und die Form des Flansches unmittelbar nachvollziehen. So wird auf vorteilhafte Weise sichergestellt, dass der umgeformte Flanschabschnitt dauerhaft in seiner umgeformten Form gehalten wird, bis das Bindemittel aktiviert wurde und die Lagen des mehrlagigen Geleges miteinander verbunden wurden, so dass sie nicht mehr gegeneinander verschoben werden können. Im Gegensatz zu Vorrichtungen, bei denen die Folie mittels eines Unterdrucks an das Stegformwerkzeug angesaugt wird, hat die Verwendung von Magnetkraft den Vorteil, dass die Folie flächig über den gesamten Bereich angezogen werden kann, ohne dass hierfür ein luftdurchlässiges Gelege verwendet werden müsste.

In einer bevorzugten Ausführungsform im Fall der Ausführungsformen A umfasst die Vorrichtung weiterhin eine Heizvorrichtung, die dazu konfiguriert ist, den zum Flansch umgeformten Flanschabschnitt zu erwärmen, so dass das Bindemittel, mit dem das Gelege versetzt ist, aktiviert wird. Mit anderen Worten wird mit der Heizvorrichtung der umgeformte Flanschabschnitt erwärmt und das Bindemittel, mit dem das Gelege versehen ist, aktiviert. Die Heizvorrichtung kann beispielsweise im Stegformwerkzeug integriert sein und durch Heizspiralen gebildet sein. Es ist aber auch denkbar, Infrarotstrahler zu verwenden, die beispielsweise die Folie oder durch die Folie hindurch den Flanschabschnitt erwärmen.

In einem zweiten Aspekt wird im Fall der Ausführungsformen A die Aufgabe durch ein Verfahren zur Herstellung eines T-förmigen Halbzeugs aus einem mehrlagigen Gelege von Verstärkungsfasern für einen Verbundwerkstoff gelöst. Das Gelege ist mit einem Bindemittel versetzt. Das T-förmige Halbzeug weist einen Steg und einen sich senkrecht zum Steg erstreckenden Flansch auf. Das Verfahren umfasst die Schritte Einspannen eines den Steg formenden Stegabschnitts des mehrlagigen Geleges in einer Arbeitsrichtung in einem Stegwerkzeug, Aufteilen von Lagen eines Flanschabschnitts des mehrlagigen Geleges in zwei Teile und Umformen der Lagen des Flanschabschnitts zu dem Flansch des T-förmigen Halbzeugs mit einem Umformwerkzeug, das in der Arbeitsrichtung über das Stegformwerkzeug bewegt wird, Ablegen einer flexiblen Folie auf dem zum Flansch umgeformten Flanschabschnitt in Arbeitsrichtung, und Erzeugen einer magnetischen Kraft zwischen der Folie und dem Stegformwerkzeug, die die flexible Folie auf das Stegformwerkzeug zieht, so dass die flexible Folie den zum Flansch umgeformten Flanschabschnitt festhält.

Vorzugsweise wird im Fall der Ausführungsformen A der zum Flansch umgeformte Flanschabschnitt erwärmt und das Bindemittel, mit dem das Gelege versetzt ist, aktiviert, während die magnetische Kraft erzeugt wird.

Nachfolgend wird im Fall der Ausführungsformen B mit der Ablagevorrichtung ein Schlauchkörper mit einem vorzugsweise flachen Querschnitt auf dem zum Flansch umgeformten Flanschabschnitt angeordnet und vorzugsweise fest an diesen angedrückt. Die Breite des Schlauchkörpers parallel zu der Ebene, in der sich der Flanschabschnitt nach dem Umformen erstreckt, sollte dabei vorzugsweise zumindest der Breite des Flanschabschnitts entsprechen. Die Ablagevorrichtung fährt dabei beispielsweise direkt hinter dem Umformwerkzeug über das Stegformwerkzeug und kann insbesondere direkt mit diesem verbunden sein, indem die Ablagevorrichtung beispielsweise an dem gleichen Rahmen befestigt ist. Der Schlauchkörper ist beispielsweise aus einem flexiblen Material geformt, das auch dehnbar sein kann, aber nicht dehnbar sein muss.

Die Ablagevorrichtung der Ausführungsformen B umfasst in einer bevorzugten Ausführungsform eine Anpressrolle, die in Arbeitsrichtung derart über das Stegformwerkzeug bewegbar ist, das der Schlauchkörper in Arbeitsrichtung hinter dem Umformwerkzeug über die Anpressrolle auf den zum Flansch umgeformten Flanschabschnitt geführt und an den Flanschabschnitt angedrückt wird. So wird sichergestellt, dass der Schlauchkörper flach auf dem umgeformten Schlauchabschnitt aufliegt und der Kontur des Flansches folgt. Zudem verhindert das Andrücken mit der Anpressrolle, dass der Schlauch bzw. der Schlauchkörper in Abschnitten mit Gas gefüllt wird, die noch nicht auf dem Flanschabschnitt angeordnet wurden, was das Ablegen des Schlauches erschweren würde.

Oberhalb des Schlauchkörpers der Ausführungsformen B wird das Haltewerkzeug so angeordnet, dass zwischen dem umgeformten Flanschabschnitt und dem oder den Haltelementen des Haltewerkzeugs ein Freiraum oder Hohlraum verbleibt, in dem der Schlauchkörper angeordnet ist und den der Schlauchkörper ausfüllt, sobald er mit dem Fluig gefüllt ist. Vorzugsweise umfasst das Haltewerkzeug eine Mehrzahl von Haltelementen in Form von Halterollen, die in Arbeitsrichtung über das Stegformwerkzeug bewegbar sind. Die Halterollen können dabei auf gleichbleibender Höhe bewegt werden, so dass sich der Abstand zwischen den Halterollen und dem umgeformten Flanschabschnitt verändert, wenn der Flanschabschnitt in Arbeitsrichtung gekrümmt sein sollte.

Schließlich umfasst die Vorrichtung der Ausführungsformen B eine Füllvorrichtung, beispielsweise ein Kompressor oder eine Pumpe, mit der der Schlauchkörper mit einem Fluid, bei dem es sich beispielsweise um ein Gas wie vorzugsweise Luft oder eine Flüssigkeit wie beispielsweise ein Öl handelt, befüllt werden kann. Dabei wird der Schlauchkörper mit einem Druck beaufschlagt, der größer als der Umgebungs- bzw. Atmosphärendruck ist. Der Schlauchkörper wird so weit gefüllt, dass er zumindest den Hohlraum zwischen Haltewerkzeug und umgeformten Flanschabschnitt ausfüllt. Da das Haltewerkzeug die Ausdehnung des Schlauchkörpers weg von dem Flanschabschnitt begrenzt, wird durch den Druck im Schlauchkörper eine Kraft auf den Flanschabschnitt ausgeübt, die die umgeformten Lagen in Position hält, bis das Bindemittel aktiviert und ausgehärtet ist. Da der Schlauchkörper flexibel ist, folgt er auf vorteilhafte Weise den Konturen des Flanschabschnitts, so dass auch T-förmige Halbzeuge mit komplexen Verläufen gefertigt werden können, ohne dass es hierfür zum Halten des Flanschabschnitts bis zum Aushärten des Binders aufwendiger Werkzeuge bedürfte.

Vorzugsweise ist die Füllvorrichtung der Ausführungsformen B dazu ausgebildet ist, den Schlauchkörper mit einem erwärmten Fluid zu befüllen, so dass der Schlauchkörper den zum Flansch umgeformten Flanschabschnitt erwärmt und das Bindemittel, mit dem das Gelege versetzt ist, unter dem zusätzlich wirkenden Druck des über Atmosphärendruck gefüllten Schlauchkörpers aktiviert wird. Damit werden auf vorteilhafte Weise keine Heizelemente benötigt, um das Bindemittel zu aktivieren. Insbesondere müssen die Heizelemente weder in die Anlageflächen integriert sein, auf die der Flanschabschnitt umgeformt wird, was die Kosten für die Herstellung des entsprechenden Werkzeugs deutlich verringern sollte, noch muss der Schlauchkörper so ausgestaltet sein, dass die Wärme durch den Schlauchkörper hindurch in den Flanschabschnitt eingebracht werden kann.

Alternativ oder zusätzlich kann der Schlauchkörper der Ausführungsformen B so ausgebildet sein, dass eine nach dem Ablegen des Schlauchkörpers auf dem umgeformten Flanschabschnitt zuweisende Oberfläche des Schlauchkörpers beheizt werden kann. Hierzu können beispielsweise Heizdrähte in der Wandung des Schlauchkörpers eingebettet sein, so dass der Schlauchkörper elektrisch beheizt werden kann.

In einem zweiten Aspekt der Ausführungsformen B wird die Aufgabe durch ein Verfahren zur Herstellung eines T-förmigen Halbzeugs aus einem mehrlagigen Gelege von Verstärkungsfasern für einen Verbundwerkstoff gelöst. Das Gelege ist mit einem Bindemittel versetzt. Das T-förmige Halbzeug weist einen Steg und einen sich senkrecht zum Steg erstreckenden Flansch auf. Das Verfahren umfasst die Schritte Einspannen eines den Steg formenden Stegabschnitts des mehrlagigen Geleges in einer Arbeitsrichtung, Aufteilen von Lagen eines Flanschabschnitts des mehrlagigen Geleges in zwei Teile und Umformen der Lagen des Flanschabschnitts zu dem Flansch des T-förmigen Halbzeugs mit einem Umformwerkzeug, das in der Arbeitsrichtung bewegt wird, Ablegen des Schlauchkörpers auf dem zum Flansch umgeformten Flanschabschnitt in Arbeitsrichtung, Positionieren eines Haltewerkzeugs derart, dass der Schlauchkörper in einem Freiraum zwischen dem Haltewerkzeug und dem zum Flansch umgeformten Flanschabschnitt angeordnet ist, und Befüllen des Schlauchkörpers mit einem Gas, so dass der Schlauchkörper den Freiraum ausfüllt und den zum Flansch umgeformten Flanschabschnitt festhält. Beispielsweise kann eine der vorstehend beschriebenen Vorrichtungen zur Durchführung des Verfahrens oder einer der nachfolgend näher beschriebenen Ausführungsformen des Verfahrens verwendet werden.

Vorzugsweise wird der Schlauchkörper der Ausführungsformen B mit einem erwärmten Gas befüllt, so dass der Schlauchkörper den zum Flansch umgeformten Flanschabschnitt erwärmt und das Bindemittel, mit dem das Gelege versetzt ist, aktiviert.

Es ist im Fall der Ausführungsformen A und B weiter bevorzugt, wenn der Stegabschnitt zwischen zwei langgestreckten, sich in der Arbeitsrichtung erstreckenden Backen eines Stegformwerkzeugs eingespannt wird.

Der Flanschabschnitt wird im Fall der Ausführungsformen A und B vorzugsweise mit einem Umformwerkzeug, das eine Mehrzahl von Umformrollen aufweist, die parallel zur Arbeitsrichtung bewegbar sind, in zwei Teile aufgeteilt und zu dem Flansch umgeformt.

Die flexible Folie wird im Fall der Ausführungsformen A in einer bevorzugten Ausführungsform über eine Anpressrolle in Arbeitsrichtung hinter dem Umformwerkzeug auf den zum Flansch umgeformten Flanschabschnitt geführt und mit der Anpressrolle an den Flanschabschnitt angedrückt.

In einer bevorzugten Ausführungsform der Ausführungsformen B wird der Schlauchkörper über eine Anpressrolle in Arbeitsrichtung hinter dem Umformwerkzeug auf den zum Flansch umgeformten Flanschabschnitt geführt und mit der Anpressrolle an den Flanschabschnitt angedrückt.

Schließlich ist es im Fall der Ausführungsformen B bevorzugt, dass das Haltewerkzeug eine Mehrzahl von Haltelementen in Form von Halterollen umfasst, die in Arbeitsrichtung über den zum Flansch umgeformten Flanschabschnitt bewegt werden.

Die Vorteile der verschiedenen Ausführungsformen des Verfahrens der Ausführungsformen A und B entsprechen den Vorteilen der verschiedenen Ausführungsformen der Vorrichtung zur Herstellung eines T-förmigen Halbzeugs.

Nachfolgend wird die Erfindung bezugnehmend auf die Zeichnung näher beschrieben. Darin zeigen im Fall der Ausführungsformen A und B
- Figur 1: eine seitliche Ansicht eines Ausführungsbeispiels einer Vorrichtung zur Herstellung eines T-förmigen Halbzeugs,
- Figur 2: einen Schnitt entlang der Linie A-A durch die Vorrichtung aus Figur 1 und
- Figur 3: ein Schritte eines Ausführungsbeispiels eines Verfahrens zur Herstellung eines T-förmigen Halbzeugs zeigendes Flussdiagramm.

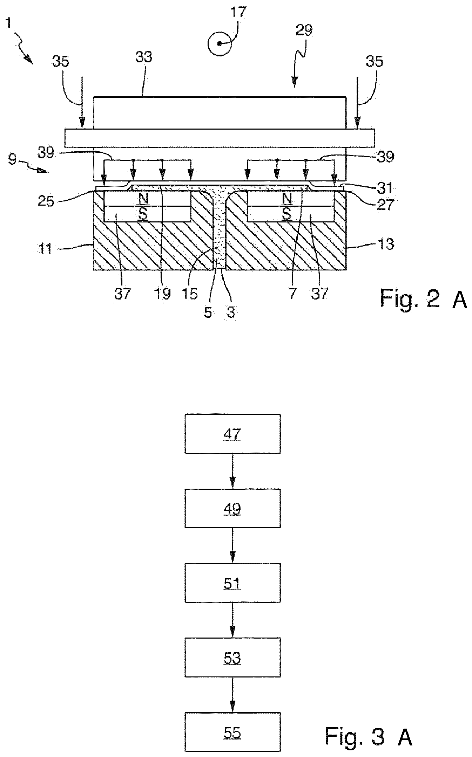

Nachfolgend wird bezugnehmend auf die Figuren 1A und 2A sowie 1B und 2B zunächst ein Ausführungsbeispiel einer Vorrichtung 1 zur Herstellung eines T-förmigen Halbzeugs für einen Faserverbundwerkstoff aus einem mehrlagigen Gelege 3 beschrieben. In den Figuren sind die einzelnen Lagen des Geleges nicht dargestellt. Das T-förmige Halbzeug, dessen Querschnittsform insbesondere in der Schnittansicht von Figur 2 deutlich zu erkennen ist, umfasst einen Steg 5 sowie einen sich senkrecht zum Steg 5 erstreckenden Flansch 7. Das Gelege 3 ist mit einem Bindemittel versetzt, dass durch Wärme aktiviert werden kann und nach dem Aushärten die Lagen des Geleges 3 miteinander verklebt.

Die Vorrichtung 1 der Ausführungsformen A und B umfasst zunächst ein Stegformwerkzeug 9 mit zwei Backen 11, 13, zwischen denen ein Stegabschnitt 15 des Geleges 3 eingespannt wird. Wie in Figur 1 zu erkennen ist, erstrecken sich die Backen 11, 13 in einer Arbeitsrichtung 17, die in Figur 2 senkrecht in die Zeichnungsebene hinein verläuft.

Der nach oben aus dem Stegformwerkzeug 9 herausragende Flanschabschnitt 19 des Geleges 3 wird im Fall der Ausführungsformen A und B von einem in Arbeitsrichtung 17 über das Stegformwerkzeug 9 bewegten Umformwerkzeug 21 in zwei Teile geteilt und zum Flansch 7 des T-förmigen Halbzeugs umgeformt. Das Umformwerkzeug 21 umfasst eine Vielzahl von Umformrollen 23, von denen in Figur 1 jedoch nur eine dargestellt ist, um die Zeichnung übersichtlich zu halten. Mit den Umformrollen 23 wird der sich zuvor im Wesentlichen in einer Ebene mit dem Stegabschnitt 15 erstreckende Flanschabschnitt 19 des Geleges 3 zunächst in zwei Teile mit jeweils einer oder mehreren Lagen aufgeteilt und dann auf Anlagenflächen 25, 27 hin umgeklappt, die von auf das Umformwerkzeug 21 zuweisenden Oberflächen 25, 27 der Backen 11, 13 des Stegformwerkzeugs 9 gebildet werden.

Auf den im Fall der Ausführungsformen A zum Flansch 7 umgeformten Flanschabschnitt 19 wird nachfolgend mit einer Ablagevorrichtung 29 eine flexible magnetisierbare Folie 31 abgelegt bzw. aufgebracht. Die Ablagevorrichtung 29 ist zusammen mit dem Umformwerkzeug 21 an einem gemeinsamen Rahmen befestigt, der in den Figuren nicht dargestellt ist, und wird zusammen mit dem Umformwerkzeug 21 in Arbeitsrichtung 17 über das Stegformwerkzeug 9 bewegt. Zum Ablegen der Folie 31 umfasst die Ablagevorrichtung 29 eine Anpressrolle 33, mit der der die Folie 31 fest an den umgeformten Flanschabschnitt 19 des Geleges 3 angedrückt wird. Dabei übt die Ablagevorrichtung 29 eine Kraft 35 auf die Folie 31 sowie das darunterliegende Gelege 3 aus, die senkrecht zu den Anlagenflächen 25, 27 wirkt. Damit wird sichergestellt, dass die Folie 31 flächig auf dem umgeformten Gelege 3 aufliegt und den Konturen des Flansches 7 folgt, auch wenn dieser Krümmungen oder andere komplexe Geometrien aufweisen sollte.

Auf die im Fall der Ausführungsformen A auf dem umgeformten Flanschabschnitt 19 abgelegte Folie 31 wird über im Stegformwerkzeug 9 bzw. konkret den Backen 11, 13 angeordnete Permanentmagnete 37 eine Magnetkraft ausgeübt, durch die die magnetisierbare Folie 31 auf die Anlageflächen 25, 27 zu mit einer Kraft 39 beaufschlagt wird. Hierdurch wird der zum Flansch 7 umgeformte Flanschabschnitt 19 des Geleges 3 zwischen den Anlageflächen 25, 27 und der Folie 31 fixiert und behält seine Form bei. Da die Folie 31 flexibel ist und die Magnetkraft unabhängig von der Form der Anlagenflächen gleichmäßig auf die Folie 31 wirkt, kann mit der Folie 31 auf vorteilhafte Weise der Flanschabschnitt 19 auch dann fixiert werden, wenn der Flansch 7 gekrümmt ist oder anderen komplexen Geometrien folgt.

Schließlich umfasst die Vorrichtung 1 im Fall der Ausführungsformen A noch eine Heizvorrichtung 41 in Form eines Infrarotstrahlers, mit dem der Flanschabschnitt 19 durch die Folie 31 hindurch bzw. indirekt durch Erwärmen der Folie 31 aufgeheizt werden kann, so dass unter dem durch die auf die Folie 31 wirkende Magnetkraft erzeugten Druck und der Wärme das Bindemittel aktiviert wird und die Lagen des Geleges 3 miteinander verklebt werden. Durch die Fixierung des umgeformten Flanschabschnitts 19 mit der auf die Folie 31 wirkenden Magnetkraft können die Lagen des Geleges 3 so lange gehalten werden, bis das Bindemittel ausgehärtet ist.

Auf den zum Flansch 7 umgeformten Flanschabschnitt 19 wird im Fall der Ausführungsformen B nachfolgend mit einer Ablagevorrichtung 29 ein Schlauchkörper 31 abgelegt bzw. aufgebracht, die zusammen mit dem Umformwerkzeug 21 in Arbeitsrichtung 17 über das Stegformwerkzeug 9 bewegt wird. Zum Ablegen des Schlauchkörpers 31 umfasst die Ablagevorrichtung 29 eine Anpressrolle 33, mit der der Schlauchkörper 31 fest an den umgeformten Flanschabschnitt 19 des Geleges 3 angedrückt wird. Dabei übt die Ablagevorrichtung 29 eine Kraft 35 auf den Schlauchkörper 31 sowie das darunterliegende Gelege 3 aus, die senkrecht zu den Anlagenflächen 25, 27 wirkt. Damit wird sichergestellt, dass der Schlauchkörper 31 flächig auf dem umgeformten Gelege 3 aufliegt und den Konturen des Flansches 7 folgt, auch wenn dieser Krümmungen oder andere komplexe Geometrien aufweisen sollte.

Der auf dem umgeformten Flanschabschnitt 19 abgelegte Schlauchkörper 31 wird im Fall der Ausführungsformen B sodann mittels einer Füllvorrichtung 37 mit einem erwärmten Fluid und zwar vorzugsweise Gas in Form von warmer Luft befüllt, wobei der Druck des Gases im Schlauchkörper 31 höher als der Atmosphärendruck ist. Dadurch wird der zuvor flach liegende Schlauchkörper 31 aufgepumpt und füllt einen Hohlraum 39 zwischen dem Flanschabschnitt 19 und einem darüber angeordneten Haltewerkzeug 41 aus. Das Haltewerkzeug 41, das eine Vielzahl von Haltelementen 43 in Form von Halterollen 45 umfasst und ebenfalls in Arbeitsrichtung 17, über das Stegformwerkzeug 9 bewegt wird, verhindert, dass sich der Schlauchkörper 31 zu weit von den Anlagenflächen 25, 27 weg ausdehnen kann. Daher wird durch den Druck im Schlauchkörper 31 eine gleichmäßige Kraft auf den umgeformten Flanschabschnitt 19 ausgeübt, die den Flanschabschnitt 19 in Position hält, während die warme Luft im Schlauchkörper 31 den Flanschabschnitt 19 erwärmt und das Bindemittel aktiviert. Aufgrund der flexiblen Form des Schlauchkörpers 31 übt dieser auf vorteilhafte Weise auch bei komplexen Geometrien des Stegs überall einen gleichmäßigen Druck auf den umgeformten Flanschabschnitt 19 des Geleges 3 aus, so dass dieses sicher fixiert werden kann, bis das Bindemittel bzw. der Binder ausgehärtet und die Lagen des Geleges 3 miteinander verklebt sind.

Zusätzlich weist im Fall der Ausführungsformen B der Schlauchkörper 31 in seiner Wandung 44 eine Mehrzahl von Heizdrähten 46 auf, mit denen einen nach Ablage des Schlauchkörpers 31 auf dem Flanschabschnitt 19 zuweisende Oberfläche 48 des Schlauchkörpers 31 und damit auch der darunterliegende Flanschabschnitt 19 des Geleges 3 zusätzlich erwärmt werden kann, um die Aktivierung und das Aushärten des Bindemittels zu beschleunigen.

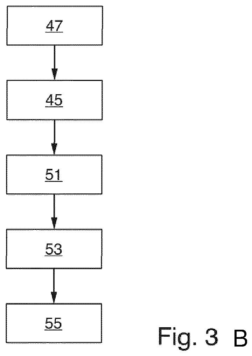

Schließlich wird im Fall der Ausführungsformen A und B bezugnehmend auf Figur 3 ein Verfahren zur Herstellung eines T-förmigen Halbzeugs aus einem Gelege 3 beschrieben, wobei zur Durchführung des Verfahrens die in den Figuren 1 und 2 gezeigte Vorrichtung 1 verwendet wird.

In einem ersten Schritt 47 wird im Fall der Ausführungsformen A zunächst der Stegabschnitt 15 des Geleges 3 zwischen den Backen 11, 13 des Stegformwerkzeugs 9 in Arbeitsrichtung 17 eingespannt. Im zweiten Schritt 49 werden die Lagen des Geleges 3 des aus den Backen 11, 13 nach oben herausstehenden Flanschabschnitts 19 durch die Umformrollen 23 des Umformwerkzeugs 21 in zwei Teile aufgeteilt und auf die Anlagenflächen 25, 27 umgeformt. Im dritten Schritt 51 wird mit dem Ablagewerkzeug 29 die magnetisierbare Folie 31 auf dem umgeformten Flanschabschnitt 19 abgelegt und durch die Anpressrolle 33 fest gegen den Flanschabschnitt 19 gedrückt. Nach dem Ablegen wird entweder unmittelbar durch Permanentmagnete 37 oder nach der Aktivierung von Elektromagneten, die anstelle oder zusätzlichen zu den Permanentmagneten 37 in der Vorrichtung 1 verwendet werden können, in einem vierten Schritt 53 eine magnetische Kraft zwischen der magnetisierbaren Folie 31 und dem Stegformwerkzeug 9 erzeugt, durch die die Folie 31 so auf die Anlagenflächen 25, 27 gezogen wird, dass auf den umgeformten Flanschabschnitt 19 ein Druck ausgeübt wird und der Flanschabschnitt bis zur Aktivierung und Aushärtung des Bindemittels fixiert wird. Schließlich wird in einem fünften Schritt 55 der umgeformte Flanschabschnitt 19 mit der Heizvorrichtung 41 erwärmt. Dadurch wird das Bindemittel aktiviert und die Lagen des Flanschabschnitts 19 miteinander verklebt.

In einem ersten Schritt 47 wird im Fall der Ausführungsformen B zunächst der Stegabschnitt 15 des Geleges 3 zwischen den Backen 11, 13 des Stegformwerkzeugs 9 in Arbeitsrichtung 17 eingespannt. Im zweiten Schritt 49 werden die Lagen des Geleges 3 des aus den Backen 11, 13 nach oben herausstehenden Flanschabschnitts 19 durch die Umformrollen 23 des Umformwerkzeugs 21 in zwei Teile aufgeteilt und auf die Anlagenflächen 25, 27 umgeformt. Im dritten Schritt 51 wird mit dem Ablagewerkzeug 29 der Schlauchkörper 31 auf dem umgeformten Flanschabschnitt 19 abgelegt und durch die Anpressrolle 33 fest gegen den Flanschabschnitt 19 gedrückt. Nachfolgend wird im vierten Schritt 53 das Haltewerkzeug 41 so positioniert, dass ein Freiraum 39 zwischen den Haltelementen 43 und dem Flanschabschnitt 19 gebildet wird, in dem der Schlaukörper 31 verläuft. Schließlich wird in einem fünften Schritt 55 der Schlauchkörper 31 durch die Füllvorrichtung 37 mit warmer Luft auf einen Druck befüllt, der größer als der Umgebungsdruck ist, so dass er den Freiraum 39 ausfüllt und den Flanschabschnitt 19 flächig an die Anlageflächen 25, 27 drückt und fixiert. Da der Schlauchkörper 31 durch die warme Luft erwärmt wird, erwärmt sich auch das Gelege 3 in Bereich des umgeformten Flanschabschnitts 19. Dadurch wird das Bindemittel aktiviert und die Lagen des Flanschabschnitts 19 miteinander verklebt.

Die Schritte des Verfahrens können im Fall der Ausführungsformen A und B parallel ausgeführt werden.

## Patentansprüche

1. Vorrichtung (1) zur Herstellung eines T-förmigen Halbzeugs aus einem mehrlagigen Gelege (3) von Verstärkungsfasern für einen Verbundwerkstoff, wobei das Gelege (3) mit einem Bindemittel versetzt ist und das T-förmige Halbzeug einen Steg (5) und einen sich senkrecht zum Steg (5) erstreckenden Flansch (7) aufweist, die Vorrichtung (1) umfassend
ein sich in einer Arbeitsrichtung (17) erstreckendes Stegformwerkzeug (9), das konfiguriert ist, um einen den Steg (5) formenden Stegabschnitt (15) des mehrlagigen Geleges (3) einzuspannen,
ein Umformwerkzeug (21), das in Arbeitsrichtung (17) über Stegformwerkzeug (9) bewegbar ist, um Lagen eines Flanschabschnitts (19) des mehrlagigen Geleges in zwei Teile aufzuteilen und zu dem Flansch (7) des T-förmigen Halbzeugs umzuformen, **dadurch gekennzeichnet, dass** die Vorrichtung weiter umfasst:
eine Ablagevorrichtung (29), die ebenfalls in Arbeitsrichtung (17) über das Stegformwerkzeug (9) bewegbar und konfiguriert ist, um eine flexible Folie (31) auf dem zum Flansch (7) umgeformten Flanschabschnitt (19) abzulegen, wobei das Stegformwerkzeug (9) und die flexible Folie (31) so ausgebildet sind, dass eine magnetische Kraft zwischen der Folie (31) und dem Stegformwerkzeug (9) erzeugt wird, die die flexible Folie (31) auf das Stegformwerkzeug (9) zieht, so dass die flexible Folie (31) den zum Flansch (7) umgeformten Flanschabschnitt (19) festhält,
wobei das Stegformwerkzeug (q) einen oder mehrere Permanentmagnete (37) und/oder einen oder mehrere Elektromagnete aufweist und
wobei die flexible Folie (31) aus einem magnetisierbaren oder magnetischen Material gebildet ist.

2. Vorrichtung (1) nach Anspruch 1, wobei das Umformwerkzeug (21) eine Mehrzahl von Umformrollen (23) aufweist, die parallel zur Arbeitsrichtung (17) über das Stegformwerkzeug (9) bewegbar sind, um den Flanschabschnitt (19) des sich zunächst in einer Ebene erstreckende Geleges (3) in zwei Teile aufzuteilen und zu dem Flansch (7) umzuformen.

3. Vorrichtung (1) nach einem der vorhergehenden Ansprüche, wobei die Ablagevorrichtung (29) eine Anpressrolle (33) umfasst, die in Arbeitsrichtung (17) derart über das Stegformwerkzeug (9) bewegbar ist, dass die flexible Folie (31) in Arbeitsrichtung (17) hinter dem Umformwerkzeug (21) über die Anpressrolle (33) auf den zum Flansch (7) umgeformten Flanschabschnitt (19) geführt und an den Flanschabschnitt (19) angedrückt wird.

4. Verfahren (1) zur Herstellung eines T-förmigen Halbzeugs aus einem mehrlagigen Gelege (3) von Verstärkungsfasern für einen Verbundwerkstoff, wobei das Gelege (3) mit einem Bindemittel versetzt ist und das T-förmige Halbzeug einen Steg (5) und einen sich senkrecht zum Steg (5) erstreckenden Flansch (7) aufweist, wobei das Verfahren die folgenden Schritte umfasst:
Einspannen eines den Steg (5) formenden Stegabschnitts (15) des mehrlagigen Geleges (3) in einer Arbeitsrichtung (17) in einem Stegformwerkzeug (9),
Aufteilen von Lagen eines Flanschabschnitts (19) des mehrlagigen Geleges (3) in zwei Teile und Umformen der Lagen des Flanschabschnitts (19) zu dem Flansch (7) des T-förmigen Halbzeugs mit einem Umformwerkzeug (21), das in der Arbeitsrichtung (17) über das Stegformwerkzeug (9) bewegt wird,
Ablegen einer flexiblen Folie (31) auf dem zum Flansch (7) umgeformten Flanschabschnitt (19) in Arbeitsrichtung (17),
Erzeugen einer magnetischen Kraft zwischen der Folie (31) und dem Stegformwerkzeug (9), die die flexible Folie (31) auf das Stegformwerkzeug (9) zieht, so dass die flexible Folie (31) den zum Flansch (7) umgeformten Flanschabschnitt (19) festhält.

5. Verfahren nach Anspruch 4, wobei die flexible Folie (31) über eine Anpressrolle (33) in Arbeitsrichtung (17) hinter dem Umformwerkzeug (21) auf den zum Flansch (7) umgeformten Flanschabschnitt (19) geführt und mit der Anpressrolle (33) an den Flanschabschnitt (19) angedrückt wird.

6. Vorrichtung (1) zur Herstellung eines T-förmigen Halbzeugs aus einem mehrlagigen Gelege (3) von Verstärkungsfasern für einen Verbundwerkstoff, wobei das Gelege (3) mit einem Bindemittel versetzt ist und das T-förmige Halbzeug einen Steg (5) und einen sich senkrecht zum Steg (5) erstreckenden Flansch (7) aufweist, die Vorrichtung (1) umfassend
ein sich in einer Arbeitsrichtung (17) erstreckendes Stegformwerkzeug (9), das konfiguriert ist, um einen den Steg (5) formenden Stegabschnitt (15) des mehrlagigen Geleges (3) einzuspannen,
ein Umformwerkzeug (21), das in Arbeitsrichtung (17) über Stegformwerkzeug (9) bewegbar ist, um Lagen eines Flanschabschnitts (19) des mehrlagigen Geleges (3) in zwei Teile aufzuteilen und zu dem Flansch (7) des T-förmigen Halbzeugs umzuformen,
eine Ablagevorrichtung (29), die ebenfalls in Arbeitsrichtung (17) über das Stegformwerkzeug (9) bewegbar ist, um einen Schlauchkörper (31) auf dem zum Flansch (7) umgeformten Flanschabschnitt (19) abzulegen,
ein Haltewerkzeug (41), das ein oder mehrere Halteelemente (43) umfasst, wobei das Haltewerkzeug (41) so positionierbar ist, dass der Schlauchkörper (31) in einem Freiraum (39) zwischen dem oder den Haltelementen (43) und dem zum Flansch (7) umgeformten Flanschabschnitt (19) angeordnet ist, und
eine Füllvorrichtung (37), die konfiguriert ist, um den Schlauchkörper (31) derart mit einem Fluid zu befüllen, dass der Schlauchkörper (31) den Freiraum (39) ausfüllt und den zum Flansch (7) umgeformten Flanschabschnitt (19) festhält.

7. Vorrichtung (1) nach Anspruch 6, wobei die Füllvorrichtung (37) dazu ausgebildet ist, den Schlauchkörper (31) mit einem erwärmten Fluid zu befüllen, so dass der Schlauchkörper (31) den zum Flansch (7) umgeformten Flanschabschnitt (19) erwärmt und das Bindemittel, mit dem das Gelege (3) versetzt ist, aktiviert wird.

8. Vorrichtung (1) nach einem der Ansprüche 6 bis 7, wobei das Umformwerkzeug (21) eine Mehrzahl von Umformrollen (23) aufweist, die parallel zur Arbeitsrichtung (17) über das Stegformwerkzeug (9) bewegbar sind, um den Flanschabschnitt (19) des sich zunächst in einer Ebene erstreckende Geleges (3) in zwei Teile aufzuteilen und zu dem Flansch (7) umzuformen.

9. Vorrichtung (1) nach einem der Ansprüche 6 bis 8, wobei die Ablagevorrichtung (29) eine Anpressrolle (33) umfasst, die in Arbeitsrichtung (17) derart über das Stegformwerkzeug (9) bewegbar ist, das der Schlauchkörper (31) in Arbeitsrichtung (29) hinter dem Umformwerkzeug (21) über die Anpressrolle (33) auf den zum Flansch (7) umgeformten Flanschabschnitt (19) geführt und an den Flanschabschnitt (19) angedrückt wird.

10. Vorrichtung (1) nach einem der Ansprüche 6 bis 9, wobei das Haltewerkzeug (41) eine Mehrzahl von Haltelementen (43) in Form von Halterollen (45) umfasst, die in Arbeitsrichtung (17) über das Stegformwerkzeug (9) bewegbar sind.

11. Vorrichtung nach einem der vorhergehenden Ansprüche 6 bis 10, wobei der Schlauchkörper (31) so ausgebildet ist, dass eine nach dem Ablegen des Schlauchkörpers (31) auf dem umgeformten Flanschabschnitt (19) zuweisende Oberfläche (48) des Schlauchkörpers (31) elektrisch beheizt werden kann.

12. Verfahren zur Herstellung eines T-förmigen Halbzeugs aus einem mehrlagigen Gelege (3) von Verstärkungsfasern für einen Verbundwerkstoff, wobei das Gelege (3) mit einem Bindemittel versetzt ist und das T-förmige Halbzeug einen Steg (5) und einen sich senkrecht zum Steg (5) erstreckenden Flansch (7) aufweist, wobei das Verfahren die folgenden Schritte umfasst:
Einspannen eines den Steg (5) formenden Stegabschnitts (15) des mehrlagigen Geleges (3) in einer Arbeitsrichtung (17),
Aufteilen von Lagen eines Flanschabschnitts (19) des mehrlagigen Geleges (3) in zwei Teile und Umformen der Lagen des Flanschabschnitts (19) zu dem Flansch (7) des T-förmigen Halbzeugs mit einem Umformwerkzeug (21), das in Arbeitsrichtung (17) bewegt wird,
Ablegen des Schlauchkörpers (31) auf dem zum Flansch (7) umgeformten Flanschabschnitt (19) in Arbeitsrichtung (17),
Positionieren eines Haltewerkzeugs (41) derart, dass der Schlauchkörper (31) in einem Freiraum (39) zwischen dem Haltewerkzeug (41) und dem zum Flansch (7) umgeformten Flanschabschnitt (19) angeordnet ist, und
Befüllen des Schlauchkörpers (31) mit einem Fluid, so dass der Schlauchkörper (31) den Freiraum (39) ausfüllt und den zum Flansch (7) umgeformten Flanschabschnitt (19) festhält.

13. Verfahren nach Anspruch 12, wobei der Flanschabschnitt (19) mit einem Umformwerkzeug (21), das eine Mehrzahl von Umformrollen (23) aufweist, die parallel zur Arbeitsrichtung (17) bewegt werden, in zwei Teile aufgeteilt und zu dem Flansch (7) umgeformt wird.

14. Verfahren nach einem der Ansprüche 12 bis 13, wobei der Schlauchkörper (31) über eine Anpressrolle (33) in Arbeitsrichtung (17) hinter dem Umformwerkzeug (21) auf den zum Flansch (7) umgeformten Flanschabschnitt (19) geführt und mit der Anpressrolle (33) an den Flanschabschnitt (19) angedrückt wird.

15. Verfahren nach einem der Ansprüche 12 bis 14, wobei das Haltewerkzeug (41) eine Mehrzahl von Haltelementen (43) in Form von Halterollen (45) umfasst, die in Arbeitsrichtung (17) über den zum Flansch (7) umgeformten Flanschabschnitt (19) bewegt werden.

## Claims

1. Device (1) for producing a T-shaped semi-finished product from a multi-layer fabric (3) of reinforcing fibers for a composite material, the fabric (3) being mixed with a binder and the T-shaped semi-finished product having a web (5) and a vertical web has a flange (7) extending to the web (5), the device (1) comprising
a web forming tool (9) extending in a working direction (17), which is configured to clamp a web section (15) of the multi-layer fabric (3) forming the web (5),
a forming tool (21), which can be moved in the working direction (17) via the web forming tool (9) in order to divide layers of a flange section (19) of the multi-layer fabric (3) into two parts and to form them into the flange (7) of the T-shaped semi-finished product, characterized that the device further comprises:
a storage device (29), which can also be moved in the working direction (17) via the web forming tool (9) and is configured to deposit a flexible film (31) on the flange section (19) formed into the flange (7), the web forming tool (9 ) and the flexible film (31) are designed in such a way that a magnetic force is generated between the film (31) and the web forming tool (9), which pulls the flexible film (31) onto the web forming tool (9), so that the flexible Film (31) holds the flange section (19) formed into the flange (7),
with the web forming tool (9) comprising one or more permanent magnets (37) and/or one or more electromagnets and
wherein the flexible film (31) is formed from a magnetizable or magnetic material.

2. The device (1) according to claim 1, wherein the forming tool (21) has a plurality of forming rollers (23) which can be moved in parallel to the working direction (17) over the web forming tool (9) in order to divide the flange section (19) of the fabric (3), which initially extends in one plane, into two parts and to form it into the flange (7).

3. The device (1) according to one of the preceding claims, wherein the storage device (29) comprises a pressure roller (33) which can be moved in the working direction (17) over the web forming tool (9) in such a way that the flexible film (31) is guided in the working direction (17) behind the forming tool (21) over the pressure roller (33) onto the flange section (19) formed into the flange (7) and pressed against the flange section (19).

4. Method (1) for producing a T-shaped semi-finished product from a multi-layer fabric (3) of reinforcing fibers for a composite material, the fabric (3) being mixed with a binder and the T-shaped semi-finished product having a web (5) and a vertical web has a flange (7) extending to the web (5), the method comprising the following steps:
Clamping a web section (15) of the multi-layer fabric (3) forming the web (5) in a working direction (17) in a web tool (9),
Dividing layers of a flange section (19) of the multi-layer fabric (3) into two parts and forming the layers of the flange section (19) into the flange (7) of the T-shaped semi-finished product with a forming tool (21) which is in the working direction (17 ) is moved over the web forming tool (9),
Placing a flexible film (31) on the flange section (19) formed into a flange (7) in the working direction (17),
Generating a magnetic force between the film (31) and the web forming tool (9), which pulls the flexible film (31) onto the web forming tool (9), so that the flexible film (31) holds the flange section (19) formed into a flange (7).

5. Method according to claim 4, wherein the flexible film (31) is guided via a pressure roller (33) in the working direction (17) behind the forming tool (21) onto the flange section (19) formed into the flange (7) and the flange section (19) is pressed with the pressure roller (33).

6. Device (1) for producing a T-shaped semi-finished product from a multi-layer fabric (3) of reinforcing fibers for a composite material, the fabric (3) being mixed with a binder and the T-shaped semi-finished product having a web (5) and a vertical web has a flange (7) extending to the web (5), the device (1) comprising
a web forming tool (9) extending in a working direction (17), which is configured to clamp a web section (15) of the multi-layer fabric (3) forming the web (5),
a forming tool (21), which can be moved in the working direction (17) via a web forming tool (9), in order to divide layers of a flange section (19) of the multi-layer fabric (3) into two parts and to form them into the flange (7) of the T-shaped semi-finished product,
a storage device (29), which can also be moved in the working direction (17) via the web forming tool (9) in order to deposit a hose body (31) on the flange section (19) formed into a flange (7),
a holding tool (41) which comprises one or more holding elements (43),
wherein the holding tool (41) can be positioned so that the hose body (31) is in a free space (39) between the holding element or elements (43) and the flange (7) formed flange section (19) is arranged, and
a filling device (37) which is configured to fill the hose body (31) with a fluid in such a way that the hose body (31) fills the free space (39) and holds the flange section (19) formed into a flange (7).

7. The device (1) according to claim 6, wherein the filling device (37) is designed to fill the hose body (31) with a heated fluid, so that the hose body (31) heats the flange section (19) formed into the flange (7) and the binder with which the fabric (3) is mixed is activated.

8. The device (1) according to one of claims 6 to 7, wherein the forming tool (21) has a plurality of forming rollers (23) which can be moved parallel to the working direction (17) via the web forming tool (9) in order to form the flange section (19) of the first divide the fabric (3), which extends in one plane, into two parts and form it into the flange (7).

9. The device (1) according to one of claims 6 to 8, wherein the storage device (29) comprises a pressure roller (33) which can be moved in the working direction (17) over the web forming tool (9) in such a way that the hose body (31) is moved in the working direction (17). 29) is guided behind the forming tool (21) over the pressure roller (33) onto the flange section (19) formed into the flange (7) and is pressed onto the flange section (19).

10. The device (1) according to one of claims 6 to 9, wherein the holding tool (41) comprises a plurality of holding elements (43) in the form of holding rollers (45) which can be moved in the working direction (17) over the web forming tool (9).

11. The device according to one of the preceding claims 6 to 10, wherein the hose body (31) is designed such that a surface (48) of the hose body (31) facing the formed flange section (19) after the hose body (31) has been placed is electrically heated.

12. Method for producing a T-shaped semi-finished product from a multi-layer fabric (3) of reinforcing fibers for a composite material, the fabric (3) being mixed with a binder and the T-shaped semi-finished product having a web (5) and a web (5) perpendicular to the web (5) extending flange (7), the method comprising the following steps:
Clamping a web section (15) of the multi-layer fabric (3) forming the web (5) in a working direction (17),
Dividing layers of a flange section (19) of the multi-layer fabric (3) into two parts and forming the layers of the flange section (19) into the flange (7) of the T-shaped semi-finished product with a forming tool (21) which is in the working direction (17). is moved,
Placing a hose body (31) on the flange section (19) formed into the flange (7) in the working direction (17),
Positioning a holding tool (41) such that the hose body (31) is arranged in a free space (39) between the holding tool (41) and the flange section (19) formed into a flange (7), and
Filling the hose body (31) with a fluid so that the hose body (31) fills the free space (39) and holds the flange section (19) formed into a flange (7).

13. Method according to claim 12, wherein the flange section (19) is divided into two parts using a forming tool (21) which has a plurality of forming rollers (23) which are moved parallel to the working direction (17) and formed into the flange (7).

14. Method according to one of claims 12 to 13, wherein the hose body (31) is guided via a pressure roller (33) in the working direction (17) behind the forming tool (21) onto the flange section (19) formed into a flange (7) and with the pressure roller (33) is pressed against the flange section (19).

15. Method according to one of claims 12 to 14, wherein the holding tool (41) comprises a plurality of holding elements (43) in the form of holding rollers (45) which move in the working direction (17) over the flange section (19) formed into a flange (7).

## Revendications

1. Dispositif (1) pour réaliser un produit semi-fini en forme de T à partir d'un tissu multicouche (3) de fibres de renfort pour matériau composite, le tissu (3) étant mélangé avec un liant et le produit semi-fini en forme de T comportant une âme (5) et une âme verticale comporte une bride (7) s'étendant jusqu'à l'âme (5), le dispositif (1) comprenant
un outil de formation de bande (9) s'étendant dans un direction de travail (17), qui est configurée pour serrer une section de bande (15) du tissu multicouche (3) formant la nappe (5),
un outil de formage (21), qui peut être déplacé la direction de travail (17) via l'outil de formation de bande (9) afin de diviser couches d'une section de bride (19) du tissu multicouche (3) en deux parties et les former dans la bride (7) du produit semi-fini en forme de T,
**caractérisé en ce que** le dispositif comprend en outre:
un dispositif de stockage (29), qui peut également être déplacé dans la direction de travail (17) via l'outil de formation de bande (9) et est configuré pour déposer un film flexible (31) sur la section de bride (19) formée dans la bride (7), l'outil de formation de bande (9) et le film flexible (31) sont conçu de telle manière qu'une force magnétique est générée entre le film (31) et l'outil de formation de bande (9), qui tire le film flexible (31) sur la bande outil de formage (9), de sorte que le film flexible (31) maintienne la section de bride (19) formé dans la bride (7),
l'outil de formation de bande (9) comprenant un ou plusieurs aimants permanents (37) et/ou un ou plusieurs électro-aimants et où le film flexible (31) est formé d'un matériau magnétisable ou magnétique.

2. Dispositif (1) selon la revendication 1, dans lequel l'outil de formation (21) comporte une pluralité de rouleaux de formation (23) qui peuvent être déplacés parallèlement à la direction de travail (17) sur l'outil de formation de bande (9) afin de diviser la section de bride (19) du tissu (3), qui s'étend initialement dans un plan, en deux parties et la former en bride (7).

3. Dispositif (1) selon l'une des revendications précédentes, dans lequel le dispositif de stockage (29) comprend un rouleau presseur (33) qui peut être déplacé dans la direction de travail (17) sur l'outil de formation de bande (9) de telle manière le film flexible (31) est guidé dans la direction de travail (17) derrière l'outil de formage (21) sur le rouleau de pression (33) sur le tronçon de bride (19) formé dans la bride (7) et pressé contre le tronçon de bride (19).

4. Procédé (1) de fabrication d'un produit semi-fini en forme de T à partir d'un tissu multicouche (3) de fibres de renfort pour matériau composite, le tissu (3) étant mélangé avec un liant et le produit semi-fini en forme de T comportant une âme (5) et une âme verticale comporte une bride (7) s'étendant jusqu'à l'âme (5), le procédé comprenant les étapes suivantes:
Serrer une section de bande (15) du tissu multicouche (3) formant la bande (5) dans une direction de travail (17) dans un outil pour bande (9),
Diviser les couches d'une section de bride (19) du tissu multicouche (3) en deux parties et former les couches de la section de bride (19) dans la bride (7) du produit semi-fini en forme de T avec un dispositif de formage l'outil (21) qui se trouve dans la direction de travail (17) est déplacé sur l'outil de formation de bande (9),
Placer un film flexible (31) sur la section de bride (19) formée en bride (7) dans la direction de travail (17),
Générer une force magnétique entre le film (31) et l'outil de formation de bande (9), qui tire le film flexible (31) sur l'outil de formation de bande (9), de sorte que le film flexible (31) retient la section de bride (19) formé en bride (7).

5. Procédé selon la revendication 4, dans lequel le film flexible (31) est guidé dans la direction de travail (17) via un rouleau presseur (33) derrière l'outil de formage (21) sur le tronçon de bride (19) formé dans la bride (7) et la section bride (19) est pressée avec le rouleau presseur (33).

6. Dispositif (1) pour réaliser un produit semi-fini en forme de T à partir d'un tissu multicouche (3) de fibres de renfort pour matériau composite, le tissu (3) étant mélangé avec un liant et le produit semi-fini en forme de T comportant une âme (5) et une âme verticale comporte une bride (7) s'étendant jusqu'à l'âme (5), le dispositif (1) comprenant
un outil de formation de bande (9) s'étendant dans une direction de travail (17), qui est configuré pour serrer une section de bande (15) du tissu multicouche (3) formant la bande (5),
un outil de formation (21), qui peut être déplacé dans la direction de travail (17) via un outil de formation de bande (9), afin de diviser les couches d'une section de bride (19) du tissu multicouche (3) en deux pièces et les former dans la bride (7) du produit semi-fini en forme de T,
un dispositif de stockage (29), qui peut également être déplacé dans la direction de travail (17) via l'outil de formation de bande (9) pour déposer un corps de tuyau (31) sur la section de bride (19) transformée en bride (7),
un outil de maintien (41) qui comprend un ou plusieurs éléments de maintien (43), l'outil de maintien (41) pouvant être positionné de telle sorte que le corps de tuyau (31) se trouve dans un espace libre (39) entre le ou les éléments de maintien ( 43) et la section de bride formée par la bride (7) (19) est disposée, et
un dispositif de remplissage (37) qui est configuré pour remplir le corps de tuyau (31) avec un fluide de telle manière que le corps de tuyau (31) remplit l'espace libre (39) et maintient la section de bride (19) formée en bride (7).

7. Dispositif (1) selon la revendication 6, dans lequel le dispositif de remplissage (37) est conçu pour remplir le corps de tuyau (31) avec un fluide chauffé, de sorte que le corps de tuyau (31) chauffe la section de bride (19) formée dans le bride (7) et le liant avec lequel le tissu (3) est mélangé est activé.

8. Dispositif (1) selon l'une des revendications 6 à 7, dans lequel l'outil de formage (21) présente une pluralité de rouleaux de formage (23) qui peuvent être déplacés parallèlement à la direction de travail (17) via l'outil de formage de bande (9) pour former la section de bride (19) du premier, diviser le tissu (3), qui s'étend dans un plan, en deux parties et former la bride (7).

9. Dispositif (1) selon l'une des revendications 6 à 8, dans lequel le dispositif de stockage (29) comprend un rouleau presseur (33) qui peut être déplacé dans la direction de travail (17) sur l'outil de formation de bande (9) de telle manière que le corps de tuyau (31) soit déplacé dans la direction de travail (17). 29) est guidé derrière l'outil de formage (21) sur le rouleau de pression (33) sur le tronçon de bride (19) formé dans la bride (7) et est pressé sur le tronçon de bride (19).

10. Dispositif (1) selon l'une des revendications 6 à 9, dans lequel l'outil de maintien (41) comprend une pluralité d'éléments de maintien (43) sous forme de rouleaux de maintien (45) mobiles dans la direction de travail (17) sur l'outil de formation de bande (9).

11. Dispositif selon l'une des revendications précédentes 6 à 10, dans lequel le corps de tuyau (31) est conçu de telle sorte qu'une surface (48) du corps de tuyau (31) tournée vers la section de bride formée (19) après le corps de tuyau (31) a été placé est chauffé électriquement.

12. Procédé de fabrication d'un produit semi-fini en forme de T à partir d'un tissu multicouche (3) de fibres de renfort pour matériau composite, le tissu (3) étant mélangé à un liant et le produit semi-fini en forme de T comportant une bande (5) et une âme (5) perpendiculaire à l'âme (5) s'étendant sur la bride (7), le procédé comprenant les étapes suivantes:
Serrer une section de bande (15) du tissu multicouche (3) formant la bande (5) dans une direction de travail (17),
Diviser les couches d'une section de bride (19) du tissu multicouche (3) en deux parties et former les couches de la section de bride (19) dans la bride (7) du produit semi-fini en forme de T avec un dispositif de formage outil (21) qui se trouve dans la direction de travail (17) est déplacé,
Placer un corps de tuyau (31) sur la section de bride (19) formée dans la bride (7) dans la direction de travail (17),
Positionner un outil de maintien (41) de telle sorte que le corps de tuyau (31) soit disposé dans un espace libre (39) entre l'outil de maintien (41) et la section de bride (19) formée en bride (7), et
Remplissage du corps de tuyau (31) avec un fluide de sorte que le corps de tuyau (31) remplisse l'espace libre (39) et maintienne la section de bride (19) formée dans une bride (7).

13. Procédé selon la revendication 12, dans lequel la section de bride (19) est divisée en deux parties à l'aide d'un outil de formage (21) qui comporte une pluralité de rouleaux de formage (23) qui sont déplacés parallèlement à la direction de travail (17) et formés dans la bride (7).

14. Procédé selon l'une des revendications 12 à 13, dans lequel le corps de tuyau (31) est guidé dans le sens de travail (17) via un rouleau de pression (33) derrière l'outil de formage (21) sur le tronçon de bride (19) formé en un bride (7) et avec le rouleau de pression (33) est pressé contre la section de bride (19).

15. Procédé selon l'une des revendications 12 à 14, dans lequel l'outil de maintien (41) comprend plusieurs éléments de maintien (43) sous forme de rouleaux de maintien (45) qui se déplacent dans la direction de travail (17) sur le tronçon de bride (19) formé en bride (7).
